# EUROPÄISCHE PATENTSCHRIFT

(11) **EP 3 064 638 B1**
(45) Veröffentlichungstag und Bekanntmachung des Hinweises auf die Patenterteilung: **03.07.2019**
(21) Anmeldenummer: 16154176.8
(22) Anmeldetag: 04.02.2016
(51) Int. Cl.: D06F 58/28, D06F 58/20

(54) **VERFAHREN ZUM BETRIEB EINES TROCKNERS MIT EINER WÄRMEPUMPE UND HIERZU GEEIGNETER TROCKNER**
METHOD FOR OPERATING A DRYER WITH A HEAT PUMP AND DRYER FOR THIS PURPOSE
PROCEDE DE FONCTIONNEMENT D'UN SECHOIR DOTE D'UNE POMPE A CHALEUR ET SECHOIR APPROPRIE

(30) Priorität: 02.03.2015 DE 102015203663
(43) Veröffentlichungstag der Anmeldung: 07.09.2016
(73) Patentinhaber: BSH Hausgeräte GmbH, 81739 München (DE)
(72) Erfinder: Belitz, Johannes, 10369 Berlin (DE); Harbach, Alvaro, 10555 Berlin (DE)

(56) Entgegenhaltungen:
- EP-A1- 2 733 255
- EP-A1- 2 746 458

## Beschreibung

Die Erfindung betrifft ein Verfahren zum Betrieb eines Trockners mit einer Wärmepumpe sowie einen zur Durchführung dieses Verfahrens geeigneten Trockner. Die Erfindung betrifft insbesondere ein Verfahren zum Betrieb eines Trockners mit einer Trommel für zu trocknende Gegenstände, einem Prozessluftkreislauf, in welchem ein Gebläse für die Beförderung von Prozessluft angeordnet ist, einer Steuerungseinheit, einer Wärmepumpe mit einem Verdampfer, einem Verflüssiger, einer Drossel und einem leistungsvariablen Verdichter, und mindestens einem Sensor, wobei zeitlich hintereinander eine Aufheizphase, eine quasistationäre Trocknungsphase und eine instationäre Trocknungsphase durchlaufen werden, und einen zur Durchführung dieses Verfahrens besonders geeigneten Trockner.

In einem Trockner wird erwärmte Luft (sogenannte Prozessluft) durch ein Gebläse in eine feuchte Gegenstände enthaltende Trocknungskammer, in der Regel eine Trommel, geleitet. Die heiße Luft nimmt Feuchtigkeit aus den zu trocknenden Gegenständen auf. Nach Durchgang durch die Trocknungskammer wird die dann feuchte Prozessluft in einen Wärmetauscher geleitet, dem zum Ausfiltern von Schmutzpartikeln, insbesondere Flusen im Falle eines Wäschetrockners oder Waschtrockners, ein Filter, insbesondere Flusenfilter, vorgeschaltet sein kann.

Dieser Trocknungsprozess ist energieintensiv, da im Regelfall die der Prozessluft vor der Beaufschlagung der zu trocknenden Gegenstände zugeführte Wärme bei der Kühlung der Prozessluft im Wärmetauscher dem Prozess energetisch verloren geht. Durch Einsatz einer Wärmepumpe lässt sich dieser Energieverlust deutlich reduzieren. Die Wärmepumpe kann dazu dienen, der von den feuchten Gegenständen abströmenden Prozessluft, die dazu eine entsprechende Wärmesenke beaufschlagt, Wärme zu entziehen und diese Wärme mittels einer geeigneten Pumpeinrichtung zu einer Wärmequelle zu führen, aus welcher sie zu der Prozessluft gelangt, bevor diese die zu trocknenden Gegenstände, in der Regel feuchte Wäschestücke, beaufschlagt. Alternativ kann auch mittels der Wärmesenke aus einer Umgebung des Trockners Wärme entnommen und über die Wärmequelle der Prozessluft zugeführt werden.

Bei einem mit einer Wärmepumpe vom Kompressor-Typ (hierin auch als "Verdichter-Typ" bezeichnet) ausgestatteten Trockner erfolgt die Kühlung der warmen, mit Feuchtigkeit beladenen Prozessluft im Wesentlichen in einem als Wärmesenke fungierenden Verdampfer der Wärmepumpe, wo die übertragene Wärme zur Verdampfung eines in der Wärmepumpe zirkulierenden Kältemittels verwendet wird. Das verdampfte Kältemittel gelangt zum Verdichter (auch als "Kompressor" bezeichnet) und wird dort verdichtet. Das im Kältemittelkreislauf zirkulierende Kältemittel wird von dem Verdichter angetrieben, so dass der Verdichter die zum Betreiben des Pumpprozesses nötige Energie liefert. Vom Verdichter gelangt es zum Verflüssiger, wo es unter Freisetzung von Wärme verflüssigt wird. Die freigesetzte Wärme erwärmt die Prozessluft. Das verflüssigte Kältemittel fließt durch eine Drossel, wo sein Binnendruck herabgesetzt wird, zurück zum Verdampfer, womit der Kreislauf geschlossen ist. Die Drossel ist insbesondere ausführbar als Ventil, Blende oder Kapillare. Häufig wird im Wärmepumpenkreislauf eine Kapillare als Drossel eingesetzt. Das im Verdampfer kondensierte Wasser wird anschließend im Allgemeinen in einem geeigneten Behälter gesammelt.

Ein Wärmepumpen-Wäschetrockner mit einer Wärmepumpe vom Kompressor-Typ weist im Allgemeinen einen geschlossenen Prozessluftkreislauf und einen Wärmepumpenkreislauflauf (hierin auch als "Kältemittelkreislauf" bezeichnet) auf. Wird Luft, d.h. Prozessluft, durch die mit feuchten Wäschestücken beladene Trommel geschickt, belädt sich die Prozessluft mit Wasserdampf, so dass die Prozessluft eine relative Luftfeuchtigkeit von bis zu 100 % haben kann. Hierbei ist zu bemerken, dass sich ein Trocknungsprozess im Allgemeinen in drei Phasen unterteilen lässt, nämlich eine Aufheizphase, eine quasistationäre Trocknungsphase und eine instationäre Trocknungsphase, welche zeitlich hintereinander durchlaufen werden. In der Aufheizphase werden Prozessluft und feuchte Wäschestücke in der Regel bis auf einen ersten maximalen Temperaturwert Tₚ aufgeheizt. Bei dieser Temperatur werden dann während der quasistationären Trocknungsphase die Wäschestücke insbesondere hinsichtlich des Oberflächenwassers getrocknet. Während der quasistationären Trocknungsphase ist die relative Luftfeuchtigkeit der Prozessluft am Ausgang der Trommel besonders hoch. Allerdings nimmt die relative Luftfeuchtigkeit der Prozessluft im Allgemeinen schließlich ab. Die zeitliche Änderung der relativen Luftfeuchtigkeit ist zu Beginn klein, nimmt aber mit Beginn der instationären Trocknungsphase zu, wobei mit Beginn der instationären Trocknungsphase im Allgemeinen auch die Temperatur der Prozessluft beim Trommelaustritt ansteigt. Dies ist insbesondere darauf zurückzuführen, dass das Oberflächenwasser der feuchten Wäschestücke im Wesentlichen verdunstet ist und die Trocknungsphase durch eine sog. Tiefentrocknung der Wäschestücke dominiert wird.

Allerdings bedeutet eine Abnahme der relativen Feuchtigkeit (auch als "relative Feuchte" bezeichnet) der Prozessluft am Trommelausgang, dass durch das Gebläse ein Anteil nicht mit Wasserdampf beladener Prozessluft bewegt wird, was einen unnötigen Energieverbrauch bedeutet.

Wärmepumpentrockner mit einem Verdichter mit einer veränderbaren Leistung sind an sich bekannt.

So beschreibt die Veröffentlichung DE 10 2005 041 145 A1 einen Wäschetrockner, bei welchem die zum Trocknen der Wäsche verwendete warme Luft unter Verwendung eines Wärmepumpenheizsystems erwärmt wird, das einen Verdichter mit veränderbarer Leistung enthält. In einer Ausführungsform enthält der Wäschetrockner eine Steuereinrichtung, welche die Leistung des Verdichters in Abhängigkeit von der außerhalb des Wäschetrockners herrschenden Temperatur steuert oder regelt.

Die EP 2 284 310 A1 beschreibt einen Trockner mit mindestens einem Wärmepumpensystem, wobei der Trockner einen Prozessluftkreis mit einer Trommel für zu trocknende Wäsche, mindestens einen Kühlkreislauf, der einen Verdichter mit einer variablen Drehgeschwindigkeit, einen ersten und einen zweiten Wärmetauscher für jeweils eine thermische Kopplung zwischen dem Prozessluftkreislauf und dem Kühlkreislauf, eine Regeleinheit für die Regelung der Drehgeschwindigkeit des Kompressors und mindestens einen Sensor für die Messung mindestens eines physikalischen Parameters des Prozessluftstroms, des Kühlmittels und/oder der Wäsche als einer Funktion der Zeit enthält. Eine zentrale Steuereinheit ist angeordnet, um die zeitliche Entwicklung der Parameter zu evaluieren und die Umdrehungsgeschwindigkeit des Verdichters gemäß der Auswertung der Zeitabhängigkeit der Parameter zu verringern.

Die EP 2 182 104 A beschreibt einen Waschtrockner mit einer Wärmepumpe vom Kompressortyp, welche einen geschwindigkeitskontrollierbaren Verdichtermotor, beispielsweise einen bürstenlosen Gleichstrommotor, enthält, sowie einen Temperatursensor für die Messung der Außentemperatur. Durch den Aufbau des Waschtrockners soll gewährleistet sein, dass bei Verwendung eines rohrförmigen Drosselventils mit einer festgelegten Öffnung die Bildung von Frost auf dem Verdampfer verhindert wird, wenn sich der Verdichtermotor in einem angehaltenen Zustand befindet.

Die EP 2 415 927 A1 beschreibt einen Wäschetrockner mit einer Wärmepumpe, die einen drehzahlvariablen Verdichter enthält. Damit kann vermieden werden, dass eine Temperatur des Kältemittels im Kältemittelkreislauf der Wärmepumpe zu hoch wird.

Die EP 2 735 643 A1 beschreibt eine Methode zur Kontrolle eines Wäschetrockners mit einem Gebläsemotor für den Betrieb eines Gebläses für Trocknungsluft mit einer variablen Geschwindigkeit und einem Trommelmotor für den Antrieb der Wäschetrommel. Dabei wird die Geschwindigkeit des Gebläsemotors auf der Basis der Leistungsaufnahme bzw. des elektrischen Stromes des Trommelmotors geregelt.

Die DE 10 2007 016 078 A1 beschreibt einen Kondensationstrockner mit einer Trocknungskammer für zu trocknende Gegenstände, einem Prozessluftkreis, in dem sich eine Heizung zur Erwärmung der Prozessluft befindet und die erwärmte Prozessluft mittels eines Gebläses über die zu trocknenden Gegenstände führbar ist, einem Luft-Luft-Wärmetauscher, einer Wärmepumpe und einer Steuereinheit, durch welche der Kondensationstrockner steuerbar ist und in welcher mehrere wählbare Programme zum Steuern des Kondensationstrockners gespeichert sind. Die Programme umfassen die phasenweise Aktivierung von Wärmepumpe, Luft-Luft-Wärmetauscher und/oder Heizung.

Die EP 2 733 257 A1 und EP 2 746 458 A1 beschreiben Wäschetrockner jeweils mit einer Wärmepumpe vom Kompressortyp, wobei ein leistungsvariabler Verdichter eingesetzt wird. Zum Betrieb der Wärmepumpe mit einer optimalen Kältemitteltemperatur wird die Leistung des Verdichters insbesondere auch unter Berücksichtigung einer Umgebungstemperatur des Wäschetrockners variiert, welche mittels eines Temperatursensors am oder im Wäschetrockner gemessen wird.

Die Veröffentlichung DE 10 2012 207 742 A1 beschreibt ein Verfahren zum Betrieb eines Trockners mit einer Programmsteuerung, einer Trommel für zu trocknende Wäschestücke, einem Prozessluftkanal, in dem sich ein Prozessluftgebläse für die Beförderung der Prozessluft und eine Heizung zur Erwärmung der Prozessluft befinden, und mit einem drehzahlvariablen Antriebsmotor, der die Trommel und das Prozessluftgebläse antreibt, wobei das Verfahren eine Aufheizphase, eine quasistationäre Trocknungsphase und eine Abkühlphase umfasst, und wobei in der quasistationären Trocknungsphase der drehzahlvariable Antriebsmotor mit einer mittleren Drehzahl α₁ und das Prozessluftgebläse mit einer mittleren Drehzahl ω₁ betrieben wird, und während der Abkühlphase mindestens zeitweise der drehzahlvariable Antriebsmotor mit einer Drehzahl α₂ kleiner als α₁ und das Prozessluftgebläse mit einer Drehzahl ω₂ kleiner als ω₁ betrieben wird. Die Abkühlphase sei im Allgemeinen die letzte Phase des Trocknungsprozesses, in welcher die Heizung zumindest zeitweise abgeschaltet ist. Schließlich ist beschrieben, dass der mindestens eine Zeitabschnitt in der quasistationären Trocknungsphase, in dem das Prozessluftgebläse mit einer reduzierten Drehzahl betrieben wird, vorzugsweise einem Zeitabschnitt in der quasistationären Trocknungsphase entspricht, in dem die Heizleistung reduziert ist, sowie, dass solche Zeitabschnitte mit reduzierter Heizleistung vor allem gegen Ende der quasistationären Trocknungsphase auftreten.

Die Veröffentlichung EP 1 775 368 A1 beschreibt einen Waschtrockner oder Wäschetrockner, umfassend eine Regeleinheit, die eingerichtet ist, um die Ein- und Ausschaltphasen eines Gebläses und darüber hinaus die Umdrehungsgeschwindigkeit des Gebläses zu regeln. Beschrieben ist auch eine Methode zum Trocknen feuchter Wäsche, bei welcher sich die Drehzahlen des Gebläses in einer ersten und einer daran anschließenden zweiten Trocknungsphase dadurch unterscheiden, dass die Fließgeschwindigkeit der Luft in der ersten Trocknungsphase größer ist.

Vor diesem Hintergrund war es Aufgabe der vorliegenden Erfindung, ein Verfahren zum energieoptimierten Betrieb eines Wäschetrockners (hierin auch als "Trockner" abgekürzt) mit einer Wärmepumpe bereitzustellen, das ermöglicht, dass die die Trommel verlassende Prozessluft eine möglichst hohe relative Luftfeuchtigkeit aufweist, so dass eine unnötige energieintensive Beförderung von trockner bzw. zu wenig feuchter Luft vermieden werden kann. Aufgabe der Erfindung war auch die Bereitstellung eines zur Durchführung dieses Verfahrens geeigneten Trockners.

Die Lösung dieser Aufgabe wird nach dieser Erfindung erreicht durch ein Verfahren zum Betrieb eines Trockners sowie einen Trockner mit den Merkmalen des jeweiligen unabhängigen Patentanspruchs. Bevorzugte Ausführungsformen des erfindungsgemäßen Verfahrens und des erfindungsgemäßen Trockners sind in jeweiligen abhängigen Patentansprüchen aufgeführt, wobei bevorzugten Ausführungsformen des erfindungsgemäßen Trockners bevorzugte Ausführungsformen des erfindungsgemäßen Verfahrens entsprechen und umgekehrt, selbst wenn dies hierin nicht ausdrücklich festgestellt ist.

Gegenstand der Erfindung ist somit ein Verfahren zum Betrieb eines Trockners mit einer Trommel für zu trocknende Wäschestücke, einem Prozessluftkreislauf, in welchem ein Gebläse für die Beförderung von Prozessluft angeordnet ist, einer Steuerungseinheit, einer Wärmepumpe mit einem Verdampfer, einem Verflüssiger, einer Drossel und einem leistungsvariablen Verdichter, und mindestens einem Sensor, wobei zeitlich hintereinander eine Aufheizphase, eine quasistationäre Trocknungsphase und eine instationäre Trocknungsphase durchlaufen werden, wobei in der quasistationären Trocknungsphase die in der Aufheizphase auf einen ersten maximalen Temperaturwert Tₚ aufgeheizten feuchten Wäschestücke getrocknet werden und mit Beginn der instationären Trocknungsphase die Temperatur der Prozessluft beim Trommelaustritt ansteigt, wobei durch Auswertung von Sensorsignalen des Sensors ein Übergang von der quasistationären zur instationären Trocknungsphase ermittelt wird, und bei einem festgestellten Übergang eine Drehzahl u des Gebläses verringert wird und eine Leistungsaufnahme p des Verdichters verringert wird, und
wobei als Sensor ein Leitwertsensor in der Trommel verwendet wird, wobei mit dem Leitwertsensor der Leitwert L_{w} der Wäschestücke in Abhängigkeit von der Zeit t gemessen wird, und der Übergang von der quasistationären zur instationären Trocknungsphase festgestellt wird, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist, und/oder
an einem Ausgang der Trommel mit einem Feuchtesensor eine relative Feuchtigkeit Fᵣₑₗ der die Trommel verlassenden Prozessluft gemessen wird und bei Messung einer relativen Feuchtigkeit F¹ᵣₑₗ die Drehzahl u des Gebläses und die Leistungsaufnahme p des Verdichters für einen vorgegebenen Zeitraum Δtₛₑₜ so herabgesetzt werden, dass die relative Feuchtigkeit F¹ᵣₑₗ maximal um einen vorgegebenen Wert ΔFₛₑₜ abnimmt.

Der Begriff "Sensor", wie er hierin verwendet wird, bedeutet einen einzelnen Sensor oder ein System von Sensoren.

In einer bevorzugten Ausführungsform werden mittels des Sensors in der instationären Trocknungsphase weitere Sensorsignale Sᵢ gemessen und in Hinblick auf eine zunehmende Trocknung der Wäschestücke ausgewertet, so dass die Drehzahl u des Gebläses und die Leistungsaufnahme p des Verdichters noch weiter verringert werden.

Wenn als Sensor ein Leitwertsensor in der Trommel verwendet wird, wobei mit dem Leitwertsensor der Leitwert L_{w} der Wäschestücke in Abhängigkeit von der Zeit t gemessen wird, und der Übergang von der quasistationären zur instationären Trocknungsphase festgestellt wird, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist, könnte der vorgegebene untere Leitwert L_{W}^{min} der Wäschestücke beispielsweise dem Zustand "bügelfeucht" entsprechen. Beim Übergang fängt erfahrungsgemäß die relative Luftfeuchte am Trommelaustritt an, signifikant zu sinken.

Erfindungsgemäß wird alternativ oder in Ergänzung hierzu an einem Ausgang der Trommel mit einem Feuchtesensor eine relative Feuchtigkeit Fᵣₑₗ der die Trommel verlassenden Prozessluft gemessen und bei Messung einer relativen Feuchtigkeit F¹ᵣₑₗ werden die Drehzahl u des Gebläses und die Leistungsaufnahme p des Verdichters für einen vorgegebenen Zeitraum Δtₛₑₜ so herabgesetzt, dass die relative Feuchtigkeit F¹ᵣₑₗ maximal um einen vorgegebenen Wert ΔFₛₑₜ abnimmt. Hierbei werden vorzugsweise bei Abnahme der relativen Luftfeuchtigkeit F¹ᵣₑₗ um einen Wert ΔF > ΔFₛₑₜ die Drehzahl u des Gebläses und die Leistungsaufnahme p des Verdichters für einen vorgegebenen Zeitraum Δtₛₑₜ weiter herabgesetzt.

Es ist bevorzugt, dass in der Wärmepumpe mittels eines Temperatursensors S^{T}_{KM} eine Temperatur T_{KM} des Kältemittels gemessen wird und die Leistungsaufnahme p des Verdichters in der quasistationären Phase derart verringert wird, dass die Temperatur T_{KM} innerhalb eines Bereiches T_{KM}¹ ≤ T_{KM} ≤ T_{KM}² liegt. Wenn mit einem in der Wärmepumpe angeordneten Temperatursensor S^{T}_{KM} eine Temperatur T_{KM} des Kältemittels gemessen wird, wird vorzugsweise bei einem Erreichen oder Überschreiten einer maximal zulässigen Kältemitteltemperatur T_{KM}^{max} die Leistungsaufnahme p des leistungsabhängigen Verdichters zusätzlich herabgesetzt.

Der Wert von T_{KM}^{max} hängt von der Art des Kältemittels und von dem Ort der Anbringung des Temperatursensors in der Wärmepumpe ab. Beispielsweise kann T_{KM}^{max} sehr nahe einer maximalen Temperatur sein, die vom Hersteller eines Kältemittels für eine effiziente und sichere Verwendung des Kältemittels angegeben wird. Ein anderer Faktor kann die maximal zulässige Windungstemperatur ("coil temperature") des Antriebsmotors des Verdichters sein. Dieser wird durch die verwendete Isolation beeinflusst und beträgt beispielsweise 115°C. Ein weiterer begrenzender Faktor, der einen Einfluss auf T_{KM}^{max} hat, ist das im Verdichter verwendete Schmiermittel. Zu hohe Temperaturen können zu einer Zersetzung, insbesondere Karbonisierung, des Schmiermittels führen und somit zu dessen Versagen, und schließlich zu einem Versagen des Verdichters. Ein wichtiger Faktor ist auch der Druck des gasförmigen Kältemittels hinter dem Verdichter, welche mit der Festigkeit der verwendeten Röhren verglichen werden muss.

Beim Betrieb eines Trockners ist es zur Schonung des Trockners wie auch der darin zu trocknenden Wäschestücke sinnvoll, dass die Temperatur der Prozessluft nicht zu hoch wird. Vorzugsweise wird daher beim erfindungsgemäßen Verfahren mittels eines im Prozessluftkreislauf angeordneten Temperatursensors S^{T}_{PL} eine Temperatur T_{PL} der Prozessluft gemessen, und bei Erreichen einer vorgegebenen maximal zulässigen Prozesslufttemperatur T_{PL}^{max} die Leistungsaufnahme p des Verdichters auf maximal 0,1 Pₘₐₓ verringert. Bevorzugt wird der Verdichter abgeschaltet, wenn eine kritische Prozesslufttemperatur T_{PL}^{krit} > T_{PL}^{max} erreicht oder überschritten wird. Sofern vorhanden, wird der Temperatursensor S^{T}_{PL} vorzugsweise zwischen der Trommel und dem Verdampfer angeordnet.

Für den Antrieb von Trommel, Gebläse und leistungsvariablem Verdichter können beispielsweise drei getrennte Antriebsmotoren verwendet werden. Es hat sich jedoch als vorteilhaft erwiesen, dass für den Antrieb des Gebläses und der Trommel ein gemeinsamer leistungsvariabler Antriebsmotor verwendet wird. Für den leistungsvariablen Verdichter wird im Allgemeinen ein separater Antriebsmotor verwendet.

Der leistungsvariable Verdichter ist insbesondere ein Schraubenverdichter oder Rollkolbenverdichter.

Erfindungsgemäß ist ein Verfahren bevorzugt, bei dem der leistungsabhängige Verdichter ein drehzahlvariabler Verdichter ist, dessen Drehzahl ω_{K} in Abhängigkeit von der Drehzahl u des Gebläses und/oder den Sensorsignalen des Sensors variiert wird, wobei in der Steuerungseinheit ein Zusammenhang zwischen der Drehzahl ω_{K} und der Drehzahl u und/oder den Sensorsignalen hinterlegt ist. Dabei ist es bevorzugt, dass die Drehzahl ω_{K} des drehzahlvariablen Verdichters in Abhängigkeit von einem durch einen Leitwertsensor gemessenen Leitwert L_{W} der Wäschestücke und/oder einer zeitlichen Änderung ΔL_{W}/Δt des Leitwertes variiert wird, wobei ein in der Steuerungseinheit hinterlegter Zusammenhang zwischen der Drehzahl ω_{K} und der gemessenen Leitfähigkeit L_{W} und/oder der zeitlichen Änderung ΔL_{W}/Δt herangezogen wird. Im Allgemeinen nimmt dabei die Drehzahl ω_{K} mit abnehmender Leitfähigkeit L_{W} ab.

Vorzugsweise wird für die Durchführung des Verfahrens die Beladung der Trommel mit Wäschestücken berücksichtigt. Insbesondere wird die Beladung der Trommel mit Wäschestücken durch die Steuerungseinheit berücksichtigt, indem in der Steuerungseinheit ein Zusammenhang zwischen einer Leitfähigkeit L_{W}, einer Leistungsaufnahme p des leistungsvariablen Verdichters und der Beladung mit der Wäsche hinterlegt ist. Dabei kann die Beladung durch einen Benutzer des Trockners manuell eingegeben werden oder aber automatisch durch eine optionale geeignete Messvorrichtung im Trockner, z.B. eine Waage, bestimmt werden. Überdies kann die Beladung auch durch eine Messung der Leitfähigkeit zu Beginn eines Trocknungsprozesses ermittelt werden.

Beim erfindungsgemäßen Verfahren kann vorteilhaft die Außentemperatur T_{R} in einem Aufstellraum des Trockners berücksichtigt werden. Die Abwärmeverluste des Trockners sind nämlich abhängig von der Umgebungstemperatur. Bei einer hohen Umgebungstemperatur ist die Temperaturdifferenz zwischen den wärmeabgebenden Flächen im Trockner, die auch als Konvektionsflächen bezeichnet werden können, z.B. die Trommel, zur Umgebungstemperatur geringer, was geringere Energieverluste aufgrund von Konvektion ergibt. Dies führt zu einer höheren Endtemperatur des Wärmepumpenkreislauflaufes, d.h. des Kältemittelkreislaufes, die kritisch sein kann und zu einem Einschalten eines Lüfters oder eines weiteren Wärmeaustauschers, soweit im Trockner vorhanden, führen würde. Im Stand der Technik wird üblicherweise die von der Prozessluft abgeführte Wärmemenge über einen Zusatzlüfter geregelt. Dies würde die Abwärmeverluste erhöhen.

In einer bevorzugten Ausführungsform ist daher das Verfahren an die Außentemperatur eines Aufstellraumes des Trockners angepasst, indem mit einem Temperatursensor S^{T}_{AR} eine Temperatur T_{R} im Aufstellraum gemessen wird und der leistungsvariable Verdichter mit einer Leistungsaufnahme p betrieben wird, welche zusätzlich abhängig von der gemessenen Temperatur T_{R} ist, so dass die Temperatur eines Kältemittels im Wärmepumpenkreislauf innerhalb eines Bereiches T_{KM}¹ ≤ T_{KM} ≤ T_{KM}² liegt. Dabei ist der leistungsvariable Verdichter insbesondere ein Schraubenverdichter oder ein Rollkolbenverdichter. Vorzugsweise wird als leistungsabhängiger Verdichter ein drehzahlgeregelter Verdichter eingesetzt, dessen Drehzahl ω_{K} in Abhängigkeit von der gemessenen Temperatur T_{R} variiert wird.

Alternativ oder in Ergänzung hierzu wird die Drehzahl u des Gebläses in Abhängigkeit von der Außentemperatur T_{R} gewählt, wozu in der Steuerungseinheit ein Zusammenhang zwischen der Drehzahl u und der Außentemperatur T_{R} hinterlegt ist. Diese Werte können in der Steuerungseinheit vorteilhaft auch für verschiedene Werte der Leitfähigkeit L_{W} der Wäschestücke hinterlegt sein.

Vorzugsweise wird bei der Erfindung eine Drehzahl ω_{K} eines drehzahlvariablen Verdichters in Abhängigkeit von einem Leitwert L_{W} der Wäschestücke und ggf. der Außentemperatur T_{R} in einem Aufstellraum des Trockners anhand eines in der Steuerungseinheit hinterlegten Zusammenhangs zwischen der Drehzahl ω_{K} und dem Leitwert L_{W} und ggf. der Temperatur T_{R} variiert.

Die Temperatur T_{R} im Aufstellraum wird mit einem Temperatursensor S^{T}_{AR} gemessen, der am Trockner an verschiedenen Stellen angeordnet sein kann, z.B. im Kontakt mit dem Aufstellraum oder aber im Inneren des Trockners. Beim letzteren Fall sollte allerdings sichergestellt sein, dass ein Wärme erzeugender und damit die Temperatur erhöhender Betrieb des Trockners genügend lange zurückliegt oder aufgrund einer geeigneten Wärmeisolierung die Messung der Temperatur T_{R} nicht oder kaum beeinflussen kann, so dass eine im Inneren des Trockners gemessene Temperatur als Maß für die Temperatur T_{R} herangezogen werden kann.

In einer bevorzugten Ausführungsform des erfindungsgemäßen Verfahrens wird die Außentemperatur T_{R} im Aufstellraum mit einem im Prozessluftkreislauf angeordneten Temperatursensor S^{T}_{PL} gemessen, wenn seit der Durchführung eines letzten Trocknungsprozesses und der Messung der Temperatur der Prozessluft eine vorbestimmte Zeitspanne tₛₑₜ vergangen ist.

In einem Trocknungsprozess steigt die Temperatur der Prozessluft allmählich an. Wie bereits erwähnt, werden in der Aufheizphase Prozessluft und feuchte Wäschestücke in der Regel bis auf einen ersten maximalen Temperaturwert Tₚ aufgeheizt. Damit dieser Temperaturanstieg möglichst rasch geschieht, wird bei einer bevorzugten Ausführungsform des erfindungsgemäßen Verfahrens der drehzahlabhängige Verdichter bis zum Erreichen einer vorgegebenen Temperatur Tₚ, bei der die zeitliche Steigerung der Temperatur T_{PL} der Prozessluft auf einen minimalen Wert abgefallen ist, mit einer Leistungsaufnahme p, die im Bereich von 0,9 bis 1 pₘₐₓ liegt, betrieben. Hierbei ist pₘₐₓ die maximale Leistungsaufnahme des Verdichters.

Gegenstand der Erfindung ist außerdem ein Trockner mit einer Trommel für zu trocknende Gegenstände, insbesondere feuchte Wäschestücke, einem Prozessluftkreislauf, in welchem ein Gebläse für die Beförderung von Prozessluft angeordnet ist, einer Steuerungseinheit, einem Wärmepumpenkreislauf mit einem Verdampfer, einem Verflüssiger, einer Drossel und einem leistungsvariablen Verdichter, und mindestens einem Sensor, wobei die Steuerungseinheit eingerichtet ist zur Durchführung eines Verfahrens, bei dem zeitlich hintereinander eine Aufheizphase, eine quasistationäre Trocknungsphase und eine instationäre Trocknungsphase durchlaufen werden, und mit dem Sensor ein Übergang von der quasistationären zur instationären Trocknungsphase ermittelt wird, und bei einem festgestellten Übergang eine Drehzahl u des Gebläses verringert wird und eine Leistungsaufnahme p des Verdichters verringert wird,
wobei als Sensor ein Leitwertsensor in der Trommel verwendet wird, wobei mit dem Leitwertsensor der Leitwert L_{w} der Wäschestücke in Abhängigkeit von der Zeit t gemessen wird, und der Übergang von der quasistationären zur instationären Trocknungsphase festgestellt wird, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist, und/oder
an einem Ausgang der Trommel mit einem Feuchtesensor eine relative Feuchtigkeit Fᵣₑₗ der die Trommel verlassenden Prozessluft gemessen wird und bei Messung einer relativen Feuchtigkeit F¹ᵣₑₗ die Drehzahl u des Gebläses und die Leistungsaufnahme p des Verdichters für einen vorgegebenen Zeitraum Δtₛₑₜ so herabgesetzt werden, dass die relative Feuchtigkeit F¹ᵣₑₗ maximal um einen vorgegebenen Wert ΔFₛₑₜ abnimmt.

Der im erfindungsgemäßen Trockner eingesetzte Verdichter ist vorzugsweise ein Schraubenverdichter oder ein Rollkolbenverdichter, insbesondere ein Rollkolbenverdichter.

Sofern im erfindungsgemäßen Trockner vorhanden, haben der oder die Temperatursensoren vorzugsweise einen länglichen Körper mit einer temperaturempfindlichen Spitze. Ein bevorzugter Temperatursensor ist ein NTC-Sensor. Vorteilhaft ist der Temperatursensor S^{T}_{PL} im Prozessluftkreislauf in Richtung des Verdampfers geneigt.

Der erfindungsgemäße Trockner weist im Allgemeinen eine Kondensatwanne für das Auffangen des im Verdampfer und ggf. in einem weiteren Wärmetauscher anfallenden Kondensats auf. Von der Kondensatwanne aus wird das Kondensat entweder durch manuelles Entleeren oder durch Abpumpen mittels einer Kondensatpumpe in einen Kondensatbehälter, der wiederum manuell entleert werden kann, oder direkt in ein Abwassersystem entsorgt.

Im erfindungsgemäßen Trockner können gleichzeitig eine Wärmepumpe und ein Luft-Luft-Wärmetauscher eingesetzt werden. Hierbei können sich Wärmepumpe und Luft-Luft-Wärmetauscher bei der Kühlung von feuchtwarmer Prozessluft ergänzen, beispielsweise dadurch, dass der Luft-Luft-Wärmetauscher insbesondere bei einer drohenden Überhitzung des Kältemittels eingesetzt wird.

Zur rascheren Erwärmung der Prozessluft kann im erfindungsgemäßen Trockner zusätzlich eine elektrische Heizung vorhanden sein. Wenn der Trockner in einer Ausführungsform eine zusätzliche elektrische Heizung umfasst, sind eine raschere Erwärmung der Prozessluft und damit eine raschere Durchführung eines Trocknungsverfahrens im Trockner möglich. Dadurch würde allerdings eine mögliche Energieeinsparung beeinträchtigt.

Der Trockner der Erfindung weist vorzugsweise auch eine optische und/oder akustische Anzeigevorrichtung auf, welche dem Benutzer des Trockners die Anzeige von z.B. Betriebsparametern und/oder einer zu erwartenden Dauer des Trocknungsprozesses ermöglicht.

Die Erfindung hat zahlreiche Vorteile. So ermöglicht es die Erfindung, dass ein Trockner immer im energetisch optimalen Betriebspunkt betrieben werden kann, ohne dass unnötig Wärmeenergie an die Umgebung des Trockners abgegeben wird oder warme Prozessluft unnötig durch den Prozessluftkanal geführt wird. Hierzu kann erfindungsgemäß die relative Luftfeuchtigkeit der die Trommel verlassenden Prozessluft auf einem hohen Niveau, vorzugsweise 100% relative Luftfeuchtigkeit, gehalten werden. Die Überhitzung des Wärmepumpenkreislaufes (Kältemittelkreislaufes) kann durch eine Reduzierung der in den Verdichter eingebrachten Leistung vermieden werden.

Der erfindungsgemäße Trockner hat zudem in Ausführungsformen den Vorteil, dass er eine energieeffiziente und sichere Durchführung eines Trocknungsverfahrens ermöglicht, wobei unterschiedliche Aufstellbedingungen und unterschiedliche Witterungsverhältnisse und Jahreszeiten optimal berücksichtigt werden können, indem eine Außentemperatur im Aufstellraum des Trockners berücksichtigt wird. Die Erfindung ermöglicht den energieoptimierten Betrieb eines Trockners mit einer Wärmepumpe ohne die Notwendigkeit für einen Zusatzlüfter bei allen Umgebungsbedingungen.

Außerdem ist es möglich, die Empfindlichkeit von Wäschestücken wie solchen aus Wolle, Seide oder Spitze zu berücksichtigen, indem die Temperatur der Prozessluft an die Art der Wäschestücke angepasst werden kann. Dies kann durch die Änderung der Leistungsaufnahme des leistungsvariablen Verdichters geschehen, indem beispielsweise eine geeignete obere Temperatur des Kältemittels festgelegt wird. Insbesondere können erfindungsgemäß auch Gebläse und leistungsvariabler Verdichter aufeinander abgestimmt werden und somit ein Trocknungsprozess optimal an Art und Menge von Wäschestücken angepasst werden.

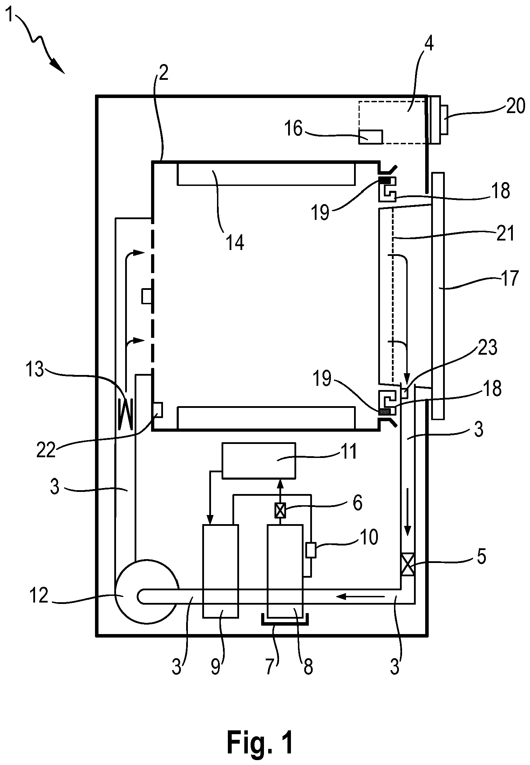

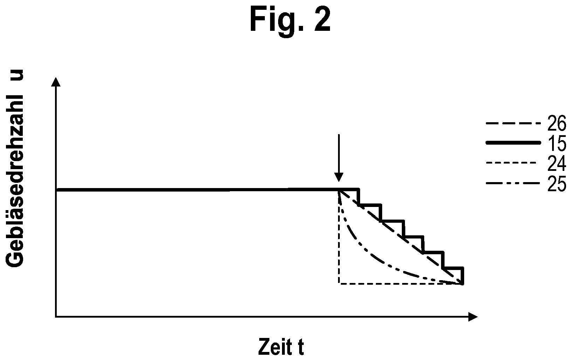

Weitere Einzelheiten der Erfindung ergeben sich aus der nachfolgenden Beschreibung eines Ausführungsbeispiels für einen Trockner und ein diesen Trockner einsetzendes Verfahren. Dabei wird Bezug genommen auf die Figuren 1 und 2 der beigefügten Zeichnung.
- Die Fig. 1: zeigt einen vertikalen Schnitt durch einen Trockner gemäß einer ersten Ausführungsform, in welchem ein erfindungsgemäßes Verfahren durchgeführt werden kann. Andere Ausführungsformen sind denkbar.
- Fig. 2: zeigt verschiedene Verläufe für die Änderung der Drehzahl u von Gebläse 12 nach dem Eintritt in die instationäre Trocknungsphase in Abhängigkeit von der Zeit t.

Der in der Fig. 1 dargestellte Trockner 1 gemäß einer ersten Ausführungsform weist eine um eine horizontale Achse drehbare Trommel 2 als Trocknungskammer auf, innerhalb derer Mitnehmer 14 zur Bewegung von Wäschestücken während einer Trommeldrehung befestigt sind. Prozessluft wird mittels eines Gebläses 12 durch die Trommel 2 in einem Prozessluftkreislauf 3 geführt. Nach Durchgang durch die Trommel 2 wird die feuchte, warme Prozessluft in den Verdampfer 8 einer Wärmepumpe 8,9,10,11 geleitet, die außerdem einen drehzahlvariablen Verdichter 11, eine Drossel 10 und einen Verflüssiger 9 aufweist. Die in der Fig. 1 gezeigten Pfeile geben die Strömungsrichtung der Luft an.

Das im Verdampfer 8 verdampfte Kältemittel der Wärmepumpe 8,9,10,11 wird über den drehzahlvariablen Verdichter 11 zum Verflüssiger 9 geleitet. Im Verflüssiger 9 verflüssigt sich das Kältemittel unter Wärmeabgabe an die im Prozessluftkreislauf 3 strömende Prozessluft. Das nun in flüssiger Form vorliegende Kältemittel wird über die Drossel 10 wiederum zum Verdampfer 8 geleitet, wodurch der Kältemittelkreislauf geschlossen ist. Ein Temperatursensor S^{T}_{KM} 6 zwischen Verdampfer 8 und Verdichter 11 misst bei dieser Ausführungsform die Temperatur T_{K} des Kältemittels.

Ein im Trockner 1 im Prozessluftkreislauf zwischen Trommel 2 und Verdampfer 8 angebrachter Temperatursensor S^{T}_{PL} 5 dient zur Messung der Temperatur T_{PL} der Prozessluft bzw. bei genügend lange ausgeschaltetem Trockner 1 zur Messung der Temperatur T_{R} im Aufstellraum, die bei dieser Ausführungsform ebenfalls zur Steuerung des Trockners bzw. seiner Wärmepumpe herangezogen werden kann.

Bei der in der Fig. 1 gezeigten Ausführungsform ist zudem eine elektrische Heizvorrichtung 13 vorhanden, die zu einer rascheren Aufheizung der Prozessluft verwendet werden kann. In anderen Ausführungsformen kann auf die elektrische Heizvorrichtung 13 verzichtet werden.

Im Trockner 1 der Fig. 1 wird von dem Verflüssiger 9 bzw. der elektrischen Heizvorrichtung 13 erwärmte Luft von hinten, d.h. von der einer die Befüllöffnung verschließenden Zugangstür 17 gegenüberliegenden Seite der Trommel 2, durch deren gelochten Boden in die Trommel 2 geleitet, kommt dort mit den hier nicht gezeigten, zu trocknenden Wäschestücken in Berührung und strömt durch die Befüllöffnung der Trommel 2 zu einem Flusensieb 21 innerhalb der Zugangstür 17. Anschließend wird der Prozessluftstrom in der Zugangstür 17 nach unten umgelenkt. Die Prozessluft wird im Prozessluftkreislauf 3 dem Verdampfer 8 zugeführt, in dem die warme, mit Feuchtigkeit beladene Prozessluft abgekühlt wird. Die abgeschiedene Feuchtigkeit wird in einer Kondensatwanne 7 aufgefangen, von wo aus sie beispielsweise durch Abpumpen entfernt werden kann, z.B. in einen hier nicht gezeigten Kondensatbehälter.

Die Trommel 2 wird bei der in der Fig. 1 gezeigten Ausführungsform am hinteren Boden mittels eines Drehlagers und vorne mittels eines Lagerschildes 18 gelagert, wobei die Trommel 3 mit einer Krempe auf einem Gleitstreifen 19 am Lagerschild 18 aufliegt und so am vorderen Ende gehalten wird. Die Steuerung des Kondensationstrockners 1 erfolgt über eine Steuerungseinheit 4, die vom Benutzer über eine Bedieneinheit 20 geregelt werden kann. Eine Anzeigevorrichtung 16 ermöglicht dem Benutzer des Trockners die Anzeige von z.B. Betriebsparametern und/oder einer zu erwartenden Dauer des Trocknungsprozesses.

Beim zu beschreibenden Verfahren wird Prozessluft wiederholt durch den Prozessluftkreislauf 3 zirkuliert, bis vorzugsweise ein gewünschter Trocknungsgrad der Wäsche erreicht ist. Der Trockner der Fig. 1 ermöglicht eine genaue Kontrolle des Betriebes der Wärmepumpe und insbesondere der Temperatur des Kältemittels, so dass eine Trocknungsphase effizient gesteuert werden kann, indem das Gebläse 12 und der Verdichter 11 so geregelt werden, dass eine festgelegte Maximaltemperatur Tₘₐₓ für die Temperatur T_{PL} der Prozessluft nicht überschritten wird. Insbesondere kann erreicht werden, dass die die Trommel verlassende Prozessluft eine möglichst hohe Luftfeuchtigkeit hat. Dann ist der Betrieb des Trockners besonders energieoptimiert.

Bei der hier gezeigten Ausführungsform werden die Trommel 2 und das Gebläse 12 durch einen gemeinsamen, in der Fig. 1 nicht gezeigten, leistungsvariablen Elektromotor, hier ein BLDC-Motor, angetrieben. Ein weiterer, ebenfalls in der Fig. 1 nicht gezeigter, leistungsvariabler Elektromotor dient zum Antrieb des leistungsvariablen Kompressors.

Bei diesem Verfahren wird durch Auswertung von Sensorsignalen eines Sensors ein Übergang von der quasistationären zur instationären Trocknungsphase ermittelt, und bei einem festgestellten Übergang eine Drehzahl u des Gebläses 12 verringert und eine Leistungsaufnahme p des Verdichters 11 verringert. Bei der in Fig. 1 gezeigten Ausführungsform eines Trockners wird als ein solcher Sensor ein Leitwertsensor 22 in der Trommel 2 verwendet, wobei mit dem Leitwertsensor 22 der Leitwert L_{w} der in der Fig. 1 nicht gezeigten Wäschestücke in Abhängigkeit von der Zeit t gemessen wird. Der Übergang von der quasistationären zur instationären Trocknungsphase wird dann festgestellt, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist. Bei der in der Fig. 1 gezeigten Ausführungsform ist zudem an einem Ausgang der Trommel 2 ein Feuchtesensor 23 zur Messung einer relativen Feuchtigkeit Fᵣₑₗ der die Trommel 2 verlassenden Prozessluft angeordnet. In einer Ausführungsform des Verfahrens werden dann bei Messung einer vorgegebenen relativen Feuchtigkeit F¹ᵣₑₗ die Drehzahl u des Gebläses 12 und die Leistungsaufnahme p des Verdichters 11 für einen vorgegebenen Zeitraum Δtₛₑₜ so herabgesetzt, dass die relative Feuchtigkeit F¹ᵣₑₗ maximal um einen vorgegebenen Wert ΔFₛₑₜ abnimmt.

Fig. 2 zeigt verschiedene Verläufe für die Änderung der Drehzahl u von Gebläse 12 nach dem Eintritt in die instationäre Trocknungsphase in Abhängigkeit von der Zeit t.

Je nach gewünschtem Verfahrensablauf, d.h. insbesondere je nach gewünschter Anpassung von Gebläsedrehzahl u und Leistungsaufnahme p des Verdichters an die abnehmende Feuchtigkeit von Wäschestücken, kann automatisch oder durch einen Benutzer eine gewünschte Reduzierung der Drehzahl u des Gebläses erfolgen. Für die Reduzierung ist dabei beispielsweise eine sprunghafte Abnahme 24 der Gebläsedrehzahl u von einem konstanten oder nahezu konstanten Wert während der quasistationären Phase auf einen konstanten Wert während der quasistationären Phase möglich. Es kann aber auch eine stufenweise Abnahme 15 der Gebläsedrehzahl u vorgesehen sein, wobei die Drehzahl in vergleichsweise kleinen Stufen hin zu einem konstanten Wert verringert wird. Überdies ist beispielsweise auch eine asymptotische Abnahme 25 oder eine lineare Abnahme 26 der Gebläsedrehzahl u möglich.

### Bezugszeichen

- 1: Trockner
- 2: Trommel
- 3: Prozessluftkreislauf
- 4: Steuerungseinheit
- 5: Temperatursensor S^{T}_{PL}; für die Messung der Temperatur T_{PL} der Prozessluft im Prozessluftkreislauf zwischen Trommel und Verdampfer
- 6: Temperatursensor S^{T}_{KM;} im Kältemittelkreislauf zur Messung einer Temperatur T_{K} des Kältemittels
- 7: Kondensatwanne
- 8: Verdampfer
- 9: Verflüssiger
- 10: Drossel
- 11: leistungsvariabler Verdichter
- 12: Gebläse
- 13: Elektrische Heizvorrichtung
- 14: Wäschemitnehmer
- 15: stufenweise Abnahme der Gebläsedrehzahl
- 16: optische/akustische Anzeigevorrichtung
- 17: Zugangstür
- 18: Lagerschild
- 19: Gleitstreifen
- 20: Bedieneinheit
- 21: Flusensieb
- 22: Leitwertsensor (in der Trommel)
- 23: Feuchtesensor (zur Bestimmung der relativen Luftfeuchtigkeit)
- 24: sprunghafte Abnahme der Gebläsedrehzahl
- 25: asymptotische Abnahme der Gebläsedrehzahl
- 26: lineare Abnahme der Gebläsedrehzahl

## Patentansprüche

1. Verfahren zum Betrieb eines Trockners (1) mit einer Trommel (2) für zu trocknende Wäschestücke, einem Prozessluftkreislauf (3), in welchem ein Gebläse (12) für die Beförderung von Prozessluft angeordnet ist, einer Steuerungseinheit (4), einer Wärmepumpe (8,9,10,11) mit einem Verdampfer (8), einem Verflüssiger (9), einer Drossel (10) und einem leistungsvariablen Verdichter (11), und mindestens einem Sensor (5,6,22,23), wobei zeitlich hintereinander eine Aufheizphase, eine quasistationäre Trocknungsphase und eine instationäre Trocknungsphase durchlaufen werden, wobei in der quasistationären Trocknungsphase die in der Aufheizphase auf einen ersten maximalen Temperaturwert Tₚ aufgeheizten feuchten Wäschestücke getrocknet werden und mit Beginn der instationären Trocknungsphase die Temperatur der Prozessluft beim Trommelaustritt ansteigt, wobei durch Auswertung von Sensorsignalen des Sensors (5,6,22,23) ein Übergang von der quasistationären zur instationären Trocknungsphase ermittelt wird, und bei einem festgestellten Übergang eine Drehzahl u des Gebläses (12) verringert wird und eine Leistungsaufnahme p des Verdichters (11) verringert wird, **dadurch gekennzeichnet, dass** als Sensor (5,6,22,23) ein Leitwertsensor (22) in der Trommel (2) verwendet wird, wobei mit dem Leitwertsensor (22) ein Leitwert L_{w} der Wäschestücke in Abhängigkeit von der Zeit t gemessen wird, und der Übergang von der quasistationären zur instationären Trocknungsphase festgestellt wird, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist, und/oder an einem Ausgang der Trommel (2) mit einem Feuchtesensor (23) eine relative Feuchtigkeit Fᵣₑₗ der die Trommel (2) verlassenden Prozessluft gemessen wird und bei Messung einer vorgegebenen relativen Feuchtigkeit F¹ᵣₑₗ die Drehzahl u des Gebläses (12) und die Leistungsaufnahme p des Verdichters (11) für einen vorgegebenen Zeitraum Δtₛₑₜ so herabgesetzt werden, dass die relative Feuchtigkeit F¹ᵣₑₗ maximal um einen vorgegebenen Wert ΔFₛₑₜ abnimmt.

2. Verfahren nach Anspruch 1, **dadurch gekennzeichnet, dass** mittels des Sensors (5,6,22,23) in der instationären Trocknungsphase weitere Sensorsignale Sᵢ gemessen und in Hinblick auf eine zunehmende Trocknung der Wäschestücke ausgewertet werden, so dass die Drehzahl u des Gebläses (12) und die Leistungsaufnahme p des Verdichters (11) noch weiter verringert werden.

3. Verfahren nach Anspruch 1 oder 2, **dadurch gekennzeichnet, dass** bei Abnahme der relativen Luftfeuchtigkeit F¹ᵣₑₗ um einen Wert ΔF > ΔFₛₑₜ die Drehzahl u des Gebläses (12) und die Leistungsaufnahme p des Verdichters (11) für einen vorgegebenen Zeitraum Δtₛₑₜ weiter herabgesetzt werden.

4. Verfahren nach einem der Ansprüche 1 bis 3, **dadurch gekennzeichnet, dass** in der Wärmepumpe (8,9,10,11) mittels eines Temperatursensors S^{T}_{KM} (6) eine Temperatur T_{KM} des Kältemittels gemessen wird und die Leistungsaufnahme p des Verdichters (11) in der quasistationären Phase derart verringert wird, dass die Temperatur T_{KM} innerhalb eines Bereiches T_{KM}¹ ≤ T_{KM} ≤ T_{KM}² liegt.

5. Verfahren nach Anspruch 4, **dadurch gekennzeichnet, dass** mittels des in der Wärmepumpe (8,9,10,11) angeordneten Temperatursensors S^{T}_{KM} (6) eine Temperatur T_{KM} des Kältemittels gemessen wird und bei einem Erreichen oder Überschreiten einer maximal zulässigen Kältemitteltemperatur T_{KM}^{max} die Leistungsaufnahme p des leistungsabhängigen Verdichters (11) zusätzlich herabgesetzt wird.

6. Verfahren nach einem der Ansprüche 1 bis 5, **dadurch gekennzeichnet, dass** der Verdichter (11) abgeschaltet wird, wenn eine kritische Prozesslufttemperatur T_{PL}^{krit} > T_{PL}^{max} erreicht oder überschritten wird.

7. Verfahren nach einem der Ansprüche 1 bis 6, **dadurch gekennzeichnet, dass** für den Antrieb des Gebläses (12) und der Trommel (2) ein gemeinsamer leistungsvariabler Antriebsmotor verwendet wird.

8. Verfahren nach einem der Ansprüche 1 bis 7, **dadurch gekennzeichnet, dass** der leistungsvariable Verdichter (11) ein Schraubenverdichter oder Rollkolbenverdichter ist.

9. Verfahren nach einem der Ansprüche 1 bis 8, **dadurch gekennzeichnet, dass** der leistungsabhängige Verdichter (11) ein drehzahlvariabler Verdichter ist, dessen Drehzahl ω_{K} in Abhängigkeit von der Drehzahl u des Gebläses (12) und/oder den Sensorsignalen des Sensors (5,6,22) variiert wird, wobei in der Steuerungseinheit (4) ein Zusammenhang zwischen der Drehzahl ω_{K} und der Drehzahl u und/oder den Sensorsignalen hinterlegt ist.

10. Verfahren nach Anspruch 9, **dadurch gekennzeichnet, dass** die Drehzahl ω_{K} des drehzahlvariablen Verdichters (11) in Abhängigkeit von einem durch einen Leitwertsensor (22) gemessenen Leitwert L_{W}^{min} der Wäschestücke und/oder einer zeitlichen Änderung ΔL_{W}/Δt des Leitwertes L_{W} variiert wird, wobei ein in der Steuerungseinheit (4) hinterlegter Zusammenhang zwischen der Drehzahl ω_{K} und der gemessenen Leitfähigkeit L_{W} und/oder der zeitlichen Änderung ΔL_{W}/Δt herangezogen wird.

11. Verfahren nach einem der Ansprüche 1 bis 10, **dadurch gekennzeichnet, dass** die Beladung der Trommel (2) mit Wäschestücken durch die Steuerungseinheit (4) berücksichtigt wird, indem in der Steuerungseinheit (4) ein Zusammenhang zwischen einer Leitfähigkeit L_{W}, einer Leistungsaufnahme p des leistungsvariablen Verdichters (11) und der Beladung mit den Wäschestücken hinterlegt ist.

12. Verfahren nach einem der Ansprüche 1 bis 11, **dadurch gekennzeichnet, dass** die Drehzahl u des Gebläses (12) in Abhängigkeit von der Außentemperatur T_{R} gewählt wird, wozu in der Steuerungseinheit (4) ein Zusammenhang zwischen der Drehzahl u und der Außentemperatur T_{R} hinterlegt ist.

13. Trockner (1) mit einer Trommel (2) für zu trocknende Gegenstände, einem Prozessluftkreislauf (3), in welchem ein Gebläse (12) für die Beförderung von Prozessluft angeordnet ist, einer Steuerungseinheit (4), einer Wärmepumpe (8,9,10,11) mit einem Verdampfer (8), einem Verflüssiger (9), einer Drossel (10) und einem leistungsvariablen Verdichter (11), und mindestens einem Sensor (5,6,22,23), wobei die Steuerungseinheit (4) zur Durchführung eines Verfahrens nach einem der vorigen Ansprüche eingerichtet ist, bei dem zeitlich hintereinander eine Aufheizphase, eine quasistationäre Trocknungsphase und eine instationäre Trocknungsphase durchlaufen werden, wobei in der quasistationären Trocknungsphase die in der Aufheizphase auf einen ersten maximalen Temperaturwert Tₚ aufgeheizten feuchten Wäschestücke getrocknet werden und mit Beginn der instationären Trocknungsphase die Temperatur der Prozessluft beim Trommelaustritt ansteigt, mit dem Sensor (5,6,22,23) ein Übergang von der quasistationären zur instationären Trocknungsphase ermittelt wird, und bei einem festgestellten Übergang eine Drehzahl u des Gebläses (12) verringert wird und eine Leistungsaufnahme p des Verdichters (11) verringert wird, **dadurch gekennzeichnet, dass** als Sensor (5,6,22,23) ein Leitwertsensor (22) in der Trommel (2) verwendet wird, wobei mit dem Leitwertsensor (22) ein Leitwert L_{w} der Wäschestücke in Abhängigkeit von der Zeit t gemessen wird, und der Übergang von der quasistationären zur instationären Trocknungsphase festgestellt wird, wenn ein vorgegebener unterer Leitwert L_{W}^{min} der Wäschestücke und/oder ein vorgegebener Mindestwert (ΔL_{W}/Δt)ₘᵢₙ für den Betrag der zeitlichen Abnahme des Leitwertes L_{w} erreicht ist, und/oder an einem Ausgang der Trommel (2) mit einem Feuchtesensor (23) eine relative Feuchtigkeit Fᵣₑₗ der die Trommel (2) verlassenden Prozessluft gemessen wird und bei Messung einer vorgegebenen relativen Feuchtigkeit F¹ᵣₑₗ die Drehzahl u des Gebläses (12) und die Leistungsaufnahme p des Verdichters (11) für einen vorgegebenen Zeitraum Δtₛₑₜ so herabgesetzt werden, dass die relative Feuchtigkeit F¹ᵣₑₗ maximal um einen vorgegebenen Wert ΔFₛₑₜ abnimmt.

## Claims

1. Method for operating a dryer (1) with a drum (2) for laundry items to be dried, a process air circuit (3), in which a fan (12) for the conveyance of process air is arranged, a control unit (4), a heat pump (8,9,10,11) with an evaporator (8), a condenser (9), a throttle (10) and a variable-power compressor (11), and at least one sensor (5,6,22,23), wherein a heating phase, a quasi-stationary drying phase and a transient drying phase are run through in succession over time, wherein in the quasi-stationary drying phase the damp laundry items, which have been heated to a first maximum temperature value Tₚ in the heating phase, are dried and the temperature of the process air rises when it exits the drum at the start of the transient drying phase, wherein a transition from the quasi-stationary to the transient drying phase is ascertained by evaluating sensor signals of the sensor (5,6,22,23), and if a transition is established, a rotational speed u of the fan (12) is reduced and a power consumption p of the compressor (11) is reduced, **characterised in that** a conductance sensor (22) in the drum (2) is used as the sensor (5,6,22,23), wherein the conductance sensor (22) is used to measure a conductance L_{w} of the laundry items as a function of time t, and the transition from the quasi-stationary to the transient drying phase is established when a predefined lower conductance L_{w}^{min} of the laundry items and/or a predefined minimum value (ΔL_{w}/Δt)ₘᵢₙ for the amount of the drop in the conductance L_{w} over time is reached, and/or a relative humidity Fᵣₑₗ of the process air leaving the drum (2) is measured by a humidity sensor (23) at an outlet of the drum (2) and, when a predefined relative humidity F¹ᵣₑₗ is measured, the rotational speed u of the fan (12) and the power consumption p of the compressor (11) are decreased for a predefined period of time Δtₛₑₜ such that the relative humidity F¹ᵣₑₗ drops by a predefined value ΔFₛₑₜ at a maximum.

2. Method according to claim 1, **characterised in that** further sensor signals Sᵢ are measured by means of the sensor (5,6,22,23) in the transient drying phase and are evaluated with regard to an increasing drying of the laundry items, so that the rotational speed u of the fan (12) and the power consumption p of the compressor (11) are reduced further still.

3. Method according to claim 1 or 2, **characterised in that**, when the relative humidity F¹ᵣₑₗ drops by a value ΔF > ΔFₛₑₜ, the rotational speed u of the fan (12) and the power consumption p of the compressor (11) are decreased further for a predefined period of time Δtₛₑₜ.

4. Method according to one of claims 1 to 3, **characterised in that** a temperature T_{KM} of the coolant in the heat pump (8,9,10,11) is measured by means of a temperature sensor S^{T}_{KM} (6) and the power consumption p of the compressor (11) in the quasi-stationary phase is reduced such that the temperature T_{KM} lies within a range T_{KM}¹ ≤ T_{KM} ≤ T_{KM}².

5. Method according to claim 4, **characterised in that** a temperature T_{KM} of the coolant is measured by means of the temperature sensor S^{T}_{KM} (6) arranged in the heat pump (8,9,10,11) and, when a maximum permissible coolant temperature T_{KM}^{max} is reached or exceeded, the power consumption p of the power-dependent compressor (11) is additionally decreased.

6. Method according to one of claims 1 to 5, **characterised in that** the compressor (11) is switched off when a critical process air temperature T_{PL}^{crit} > T_{PL}^{max} is reached or exceeded.

7. Method according to one of claims 1 to 6, **characterised in that** a common variable-power drive motor is used for driving the fan (12) and the drum (2).

8. Method according to one of claims 1 to 7, **characterised in that** the variable-power compressor (11) is a screw compressor or rotary compressor.

9. Method according to one of claims 1 to 8, **characterised in that** the power-dependent compressor (11) is a compressor with variable rotational speed, the rotational speed ω_{K} of which is varied as a function of the rotational speed u of the fan (12) and/or the sensor signals of the sensor (5,6,22), wherein a relationship between the rotational speed ω_{K} and the rotational speed u and/or the sensor signals is stored in the control unit (4).

10. Method according to claim 9, **characterised in that** the rotational speed ω_{K} of the compressor (11) with variable rotational speed is varied as a function of a conductance L_{W}^{min} of the laundry items measured by a conductance sensor (22) and/or a change over time ΔL_{W}/Δt of the conductance L_{W}, wherein use is made of a relationship, stored in the control unit (4), between the rotational speed ω_{K} and the measured conductance L_{W} and/or the change over time ΔL_{W}/Δt.

11. Method according to one of claims 1 to 10, **characterised in that** the loading of the drum (2) with laundry items is taken into consideration by the control unit (4) by a relationship between a conductance L_{W}, a power consumption p of the variable-power compressor (11) and the loading with the laundry items being stored in the control unit (4).

12. Method according to one of claims 1 to 11, **characterised in that** the rotational speed u of the fan (12) is chosen as a function of the external temperature T_{R}, to which end a relationship between the rotational speed u and the external temperature T_{R} is stored in the control unit (4).

13. Dryer (1) with a drum (2) for objects to be dried, a process air circuit (3), in which a fan (12) for the conveyance of process air is arranged, a control unit (4), a heat pump (8,9,10,11) with an evaporator (8), a condenser (9), a throttle (10) and a variable-power compressor (11), and at least one sensor (5,6,22,23), wherein the control unit (4) is configured to perform a method according to one of the preceding claims, in which a heating phase, a quasi-stationary drying phase and a transient drying phase are run through in succession over time, wherein in the quasi-stationary drying phase the damp laundry items, which have been heated to a first maximum temperature value Tₚ in the heating phase, are dried and the temperature of the process air rises when it exits the drum at the start of the transient drying phase, a transition from the quasi-stationary to the transient drying phase is ascertained by the sensor (5,6,22,23), and if a transition is established, a rotational speed u of the fan (12) is reduced and a power consumption p of the compressor (11) is reduced, **characterised in that** a conductance sensor (22) in the drum (2) is used as the sensor (5,6,22,23), wherein the conductance sensor (22) is used to measure a conductance L_{w} of the laundry items as a function of time t, and the transition from the quasi-stationary to the transient drying phase is established when a predefined lower conductance L_{w}^{min} of the laundry items and/or a predefined minimum value (ΔL_{w}/Δt)ₘᵢₙ for the amount of the drop in the conductance L_{w} over time is reached, and/or a relative humidity Fᵣₑₗ of the process air leaving the drum (2) is measured by a humidity sensor (23) at an outlet of the drum (2) and, when a predefined relative humidity F¹ᵣₑₗ is measured, the rotational speed u of the fan (12) and the power consumption p of the compressor (11) are decreased for a predefined period of time Δtₛₑₜ such that the relative humidity F¹ᵣₑₗ drops by a predefined value ΔFₛₑₜ at a maximum.

## Revendications

1. Procédé de fonctionnement d'un sèche-linge (1) comprenant un tambour (2) pour des pièces de linge à sécher, un circuit d'air de traitement (3), dans lequel une soufflante (12) destinée à transporter de l'air de traitement est disposée, une unité de commande (4), une pompe à chaleur (8, 9, 10, 11) comportant un évaporateur (8), un condenseur (9), un dispositif d'étranglement (10) et un compresseur à puissance variable (11), et au moins un capteur (5, 6, 22, 23), dans lequel une phase d'échauffement, une phase de séchage quasi-stationnaire et une phase de séchage instable se succèdent chronologiquement, et dans la phase de séchage quasi-stationnaire, les pièces de linge humides échauffées dans la phase d'échauffement jusqu'à une première valeur de température maximale Tₚ sont séchées, et, au début de la phase instable de séchage, la température de l'air de traitement augmente à la sortie du tambour, dans lequel une transition de la phase de séchage quasi-stationnaire à la phase de séchage instable est déterminée par une évaluation des signaux de capteur (5, 6, 22, 23), et, lors d'une transition déterminée, la vitesse de rotation u de la soufflante (12) est diminuée et la puissance absorbée p du compresseur (11) est réduite,
**caractérisé en ce qu'**on utilise à titre de capteur (5, 6, 22, 23) un capteur de conductance (22) dans le tambour (2), dans lequel la conductance L_{w} des pièces de linge est mesurée en fonction du temps t au moyen du capteur de conductance (22), et la transition de la phase de séchage quasi-stationnaire à la phase de séchage instable est établie lorsque la conductance des pièces de linge atteint une valeur inférieure prédéterminée L_{w}^{min} et/ou lorsqu'une valeur minimale (ΔL_{w}/Δt)ₘᵢₙ de la diminution en fonction du temps de la conductance L_{w} est atteinte, et/ou l'humidité relative Fᵣₑₗ de l'air de traitement sortant du tambour (2) est mesurée au moyen d'un capteur d'humidité (23) à la sortie du tambour (2) et lorsqu'une humidité relative prédéterminée F¹ᵣₑₗ est mesurée, la vitesse de rotation u de la soufflante (12) et la puissance absorbée p du compresseur (11) sont diminuées pendant une période prédéterminée Δtₛₑₜ de manière à ce que l'humidité relative F¹ᵣₑₗ diminue au maximum d'une valeur prédéterminée ΔFₛₑₜ.

2. Procédé selon la revendication 1, **caractérisé en ce que** d'autres signaux de capteur Si sont mesurés au moyen du capteur (5, 6, 22, 23) dans la phase de séchage instable et ceux-ci sont évalués pour déterminer une augmentation du séchage des pièces de linge, et en fonction de celle-ci, la vitesse de rotation u de la soufflante (12) et la puissance absorbée p du compresseur (11) sont encore plus réduites.

3. Procédé selon la revendication 1 ou 2, **caractérisé en ce qu'**en cas d'une diminution de l'humidité relative F¹ᵣₑₗ d'une valeur ΔF > ΔFₛₑₜ, la vitesse de rotation u de la soufflante (12) et la puissance absorbée p du compresseur (11) sont réduites davantage pendant une période prédéterminée Δtₛₑₜ.

4. Procédé selon l'une des revendications 1 à 3, **caractérisé en ce qu'**une température T_{KM} du fluide frigorigène dans la pompe à chaleur (8, 9, 10, 11) est mesurée au moyen d'un capteur de température S^{T}_{KM} (6) et la puissance absorbée p du compresseur (11) est diminuée dans la phase de séchage quasi-stationnaire de manière à ce que la température T_{KM} soit comprise dans une plage T_{KM}¹ ≤ T_{KM} ≤ T_{KM}².

5. Procédé selon la revendication 4, **caractérisé en ce qu'**une température T_{KM} du fluide frigorigène est mesurée au moyen du capteur de température S^{T}_{KM} (6) disposé dans la pompe à chaleur (8, 9, 10, 11) et lorsque celle-ci atteint ou dépasse une température T_{KM}^{max} maximale admissible du fluide frigorigène, la puissance absorbée p du compresseur (11) à puissance variable est réduite davantage.

6. Procédé selon l'une des revendications 1 à 5, **caractérisé en ce que** le compresseur (11) est mis hors tension lorsqu'une température d'air de traitement critique T_{PL}^{krit} > T_{PL}^{max} est atteinte ou dépassée.

7. Procédé selon l'une des revendications 1 à 6, **caractérisé en ce qu'**un moteur d'entraînement à puissance variable commun est utilisé pour entraîner la soufflante (12) et le tambour (2).

8. Procédé selon l'une des revendications 1 à 7, **caractérisé en ce que** le compresseur à puissance variable (11) est un compresseur à vis ou un compresseur à palettes.

9. Procédé selon l'une des revendications 1 à 8, **caractérisé en ce que** le compresseur à puissance variable (11) est un compresseur à vitesse de rotation variable, dont la vitesse de rotation ω_{K} varie en fonction de la vitesse de rotation u de la soufflante (12) et/ou des signaux de capteur (5, 6, 22), dans lequel une relation entre la vitesse de rotation ω_{K} et la vitesse de rotation u et/ou les signaux de capteur est mise en mémoire dans l'unité de commande.

10. Procédé selon la revendication 9, **caractérisé en ce que** la vitesse de rotation ω_{K} du compresseur à vitesse de rotation variable (11) varie en fonction d'une conductance L_{w}^{min} des pièces de linge mesurée par un capteur de conductance (22) et/ou d'une variation dans le temps ΔL_{w}/Δt de la conductance L_{w}, en utilisant une relation mise en mémoire dans l'unité de commande (4) entre la vitesse de rotation ω_{K} et la conductance mesurée L_{w} et/ou la variation dans le temps ΔL_{w}/Δt.

11. Procédé selon l'une des revendications 1 à 10, **caractérisé en ce que** le chargement du tambour (2) avec des pièces de linge est pris en compte par l'unité de commande (4) sur la base d'une relation enregistrée dans l'unité de commande entre une conductivité L_{w}, une puissance absorbée p du compresseur (11) à puissance variable et le chargement avec les pièces de linge.

12. Procédé selon l'une des revendications 1 à 11, **caractérisé en ce que** la vitesse de rotation u de la soufflante (12) est sélectionnée en fonction de la température extérieure T_{R} et, à cet effet, une relation entre la vitesse de rotation u et la température extérieure T_{R} est mise en mémoire dans l'unité de commande (4).

13. Sèche-linge (1) comprenant un tambour (2) pour des articles à sécher, un circuit d'air de traitement (3), dans lequel une soufflante (12) destinée à transporter de l'air de traitement est disposée, une unité de commande (4), une pompe à chaleur (8, 9, 10, 11) comportant un évaporateur (8), un condenseur (9), un dispositif d'étranglement (10) et un compresseur à puissance variable (11), et au moins un capteur (5, 6, 22, 23), dans lequel l'unité de commande (4) est configurée pour exécuter un procédé selon l'une des revendications précédentes, dans lequel une phase d'échauffement, une phase de séchage quasi-stationnaire et une phase de séchage instable se succèdent chronologiquement, et dans la phase de séchage quasi-stationnaire, les pièces de linge humides échauffées dans la phase d'échauffement jusqu'à une première valeur de température maximale Tₚ sont séchées et, au début de la phase instable de séchage, la température de l'air de traitement augmente à la sortie du tambour, dans lequel une transition de la phase de séchage quasi-stationnaire à la phase de séchage instable est déterminée par le capteur (5, 6, 22, 23) et, lorsqu'une transition est déterminée, la vitesse de rotation u de la soufflante (12) est diminuée et la puissance absorbée p du compresseur (11) est réduite,
**caractérisé en ce qu'**on utilise à titre de capteur (5, 6, 22, 23) un capteur de conductance (22) dans le tambour (2), dans lequel la conductance L_{w} des pièces de linge est mesurée en fonction du temps t au moyen du capteur de conductance (22) et la transition de la phase de séchage quasi-stationnaire à la phase de séchage instable est établie lorsque la conductance des pièces de linge atteint une valeur inférieure prédéterminée L_{w}^{min} et/ou lorsqu'une valeur minimale (ΔL_{w}/Δt)ₘᵢₙ de la diminution en fonction du temps de la conductance L_{w} est atteinte, et/ou l'humidité relative Fᵣₑₗ de l'air de traitement sortant du tambour (2) est mesurée au moyen d'un capteur d'humidité (23) à la sortie du tambour (2) et lorsqu'une humidité relative prédéterminée F¹ᵣₑₗ est mesurée, la vitesse de rotation u de la soufflante (12) et la puissance absorbée p du compresseur (11) sont diminuées pendant une période prédéterminée Δtₛₑₜ de manière à ce que l'humidité relative F¹ᵣₑₗ diminue au maximum d'une valeur prédéterminée ΔFₛₑₜ.
